Europäisches Patentamt

European Patent Office

Office européen des brevets

(19)

(11) Veröffentlichungsnummer: **0 162 440**
**A2**

(12) **EUROPÄISCHE PATENTANMELDUNG**

(21) Anmeldenummer: **85106186.1**

(22) Anmeldetag: **21.05.85**

(51) Int. Cl.⁴: **B 23 H 9/00**

(30) Priorität: **25.05.84 DE 3419503**

(43) Veröffentlichungstag der Anmeldung:
**27.11.85 Patentblatt 85/48**

(84) Benannte Vertragsstaaten:
**AT CH FR GB IT LI**

(71) Anmelder: **AEG - Elotherm GmbH**
**Hammesberger Strasse 31**
**D-5630 Remscheid-Hasten(DE)**

(72) Erfinder: **Wolter, Bernd**
**Henkelshof 2-4**
**D-5630 Remscheid 11(DE)**

(72) Erfinder: **Pott, Paul-G.**
**Am Stadtrand 49**
**D-5632 Wermelskirchen 1(DE)**

(74) Vertreter: **Patentanwaltsbüro Cohausz & Florack**
**Schumannstrasse 97**
**D-4000 Düsseldorf 1(DE)**

(54) **Verfahren und Einrichtung zum elektrochemischen Senken von Nuten sehr kleiner Breite.**

(57) Die Erfindung bezieht sich auf ein Verfahren und eine Einrichtung zum elektrochemischen Senken von Nuten sehr kleiner Breite, insb. kleiner als 1,0 mm, in ein Werkstück. Das Senken erfolgt mit einer quer zur Senkrichtung verlaufenden Draht- oder Stabelektrode (1). Damit die in den Arbeitsspalt 6 eingeführte Elektrolytflüssigkeit nicht unkontrolliert abströmt, sondern auf der gesamten Arbeitslänge der Elektrode den Arbeitsspalt ausfüllt, ist ein zur Rückseite der Elektrode wirksamer Staukörper (2) vorgesehen. Dadurch ist gewährleistet, daß die Strömung des Elektrolyten im wesentlichen im Arbeitsspalt und in Längsrichtung erfolgt.

EP 0 162 440 A2

Anmelder:

AEG-Elotherm GmbH, Hammesbergerstraße 31
5630 Remscheid-Hasten

Verfahren und Einrichtung zum elektrochemischen
Senken von Nuten sehr kleiner Breite

Die Erfindung bezieht sich auf ein Verfahren zum elektrochemischen Senken von Nuten sehr kleiner Breite, insb. kleiner als 1,0 mm in ein Werkstück.

Es ist bekannt, beim elektrochemischen Senken von Nuten eine Flachelektrode zu verwenden, deren dem abzutragenden Werkstoff des Werkstückes gegenüberliegende Stirnseite freiliegt und deren Seiten durch Isoliermaterial abgedeckt sind. Mit solchen Elektroden ist es möglich, Nuten mit über die gesamte Höhe konstanter Breite herzustellen. Mit solchen Elektroden lassen sich aber Nuten unterhalb einer kleinsten Breite nicht herstellen. Da eine ausreichende Isolierung der Seiten der Elektrode gegenüber den Seitenwänden der Nuten nur gewährleistet ist, wenn das Isoliermaterial eine Mindesstärke von 0,2 mm hat, ergibt sich bei einer beidseitigen Isolierung und dem dazwischenliegenden Elektrodenteil eine nicht zu unterschreitende Mindestbreite von allenfalls 1 mm.

Der Erfindung liegt die Aufgabe zugrunde, ein Verfahren

K/Tn.- 84/603 FP

und eine Einrichtung zum elektrochemischen Senken von Nuten sehr kleiner Breite, insb. unterhalb von 1 mm zu schaffen.

Diese Aufgabe wird erfindungsgemäß dadurch gelöst, daß das Senken mit einer quer zur Senkrichtung verlaufenden Draht- oder Stabelektrode erfolgt, und daß das Abströmen der in den von der Elektrode und dem abzutragenden Werkstoff gebildeten Arbeitsspalt eingeführten Elektrolytflüssigkeit in die bereits gebildete, hinter der Elektrode liegende Nut derart stark behindert wird, daß der Arbeitsspalt auf seiner gesamten Länge mit Elektrolytflüssigkeit gefüllt bleibt und ein Abströmen der Elektrolytflüssigkeit im wesentlichen in Längsrichtung des Arbeitsspaltes erfolgt.

Dieses Verfahren läßt sich mit einer Einrichtung durchführen, die dadurch gekennzeichnet ist, daß auf der Rückseite der Elektrode ein sich über die gesamte Arbeitslänge der Elektrode erstreckender und in seiner Breite der Breite der Nut angepaßter Staukörper für die Elektrolytflüssigkeit im Arbeitsspalt angeordnet ist, der gemeinsam mit der Elektrode in das Werkstück senkbar ist. Dabei kann nach einer Ausgestaltung der Erfindung der Staukörper aus isolierendem Material bestehen und die Elektrode auf der Stirnseite des Staukörpers angeordnet sein.

Bei der Erfindung entfällt die auf der Rückseite der wirksamen Elektrode angeordnete Stromzuführung und damit auch die Isolierungen, so daß von dieser Seite aus der Breite der herzustellenden Nut keine untere Grenze gesetzt ist. Für genügend Elektrolytflüssigkeit im Arbeitsspalt sorgt der Staukörper, der ein Abströmen der Elektrolytflüssigkeit aus dem Arbeitsspalt in den bereits geschaffenen Raum der Nut verhindert. Es hat sich gezeigt, daß mit der Erfindung Spaltbreiten von 0,4 mm sich ohne weiteres herstellen lassen.

Im folgendem wird die Erfindung anhand einer Zeichnung näher erläutert, die einen Querschnitt durch ein Werkstück während des elektrochemischen Senkens einer Nut zeigt.

Eine Drahtelektrode 1, die am Minuspol einer Stromquelle angeschlossen ist, ist auf der Stirnseite eines aus isolierendem Material bestehenden Staukörpers 2 angeordnet. Die Breite des Staukörpers 2 ist nur geringfügig kleiner als die Breite der in dem im anderen Pol der Stromquelle angeschlossenen Werkstück 3 herzustellenden Nut 4.

Für das Senken wird die benötigte Elektrolytflüssigkeit von einem offenen Ende der Nut 4 in den von der Elektrode 1 und dem abzutragenen Werkstoff 5 gebildeten Arbeitsspalt 6 eingeführt. Diese Elektrolytflüssigkeit durchströmt den Arbeitsspalt 6 in Längsrichtung und nimmt dabei das abgetragene Material mit. An ein Abströmen zur Rückseite der Elektrode 1 wird die Elektrolytflüssigkeit durch den Staukörper 2 gehindert. Dadurch wird gewährleistet, daß der Arbeitsspalt 6 während des Senkens mit Elektrolytflüssigkeit gefüllt bleibt und der abgetragene Werkstoff mit der Elektrolytflüssigkeit aus dem Arbeitsspalt 4 gefördert wird.

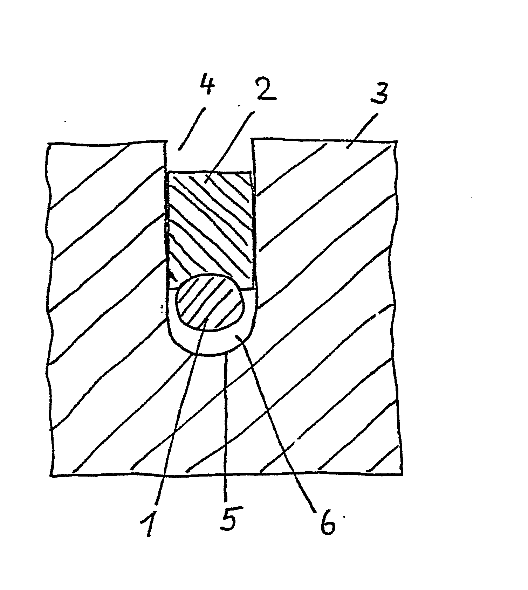

Ansprüche

1. Verfahren zum elektrochemischen Senken von Nuten sehr kleiner Breite, insb. kleiner als 1,0 mm in ein Werkstück, d a d u r c h  g e k e n n z e i c h n e t daß das Senken mit einer quer zur Senkrichtung verlaufenden Draht- oder Stabelektrode erfolgt, und daß das Abströmen der in den von der Elektrode und dem abzutragenden Werkstoff des Werkstückes gebildeten Arbeitsspalt eingeführten Elektrolytflüssigkeit in die bereits gebildete und hinter der Elektrode liegende Nut derart stark behindert wird, daß der Arbeitsspalt auf seiner gesamten Länge mit Elektrolytflüssigkeit gefüllt bleibt und ein Abströmen der Elektrolytflüssigkeit im wesentlichen in Längsrichtung des Arbeitsspaltes erfolgt.

2. Einrichtung zur Durchführung des Verfahrens nach Anspruch 1, d a d u r c h  g e k e n n z e i c h n e t, daß auf der Rückseite der Elektrode(1)ein sich über die gesamte Arbeitslänge der Elektrode(1)erstreckender und in seiner Breite der Breite der Nut(4)angepaßter Staukörper(2)für die Elektrolytflüssigkeit angeordnet ist, der gemeinsam mit der Elektrode(1)in das Werkstück(3)senkbar ist.

3. Einrichtung nach Anspruch 2, d a d u r c h g e k e n n z e i c h n e t , daß der Staukörper (2) aus isolierendem Material besteht und die Elektrode (1) auf der Stirnseite des Staukörpers (2) angeordnet ist.

1/1